# EUROPEAN PATENT APPLICATION

(11) **EP 1 426 945 A2**
(43) Date of publication of application: **09.06.2004**
(21) Application number: 03027309.8
(22) Date of filing: 26.11.2003
(51) Int. Cl.: G11B 17/04

(54) **Disc-transfer roll for disc device**

(30) Priority: 28.11.2002 JP 2002345966; 25.12.2002 JP 2002374144
(71) Applicant: ORION ELECTRIC CO., Ltd., Takefu-City, Fukui 915-8555 (JP)
(72) Inventor: Minowa, Taizo, Takefu-shi Fukui, 915-8555 (JP); Azai, Kouji, Takefu-shi Fukui, 915-8555 (JP); Harada, Tomoyuki, Takefu-shi Fukui, 915-8555 (JP)
(74) Representative: VOSSIUS & PARTNER

(57) **Abstract**

To provide a disc-transfer roll which can be applied to a disc circumference under pressure strong enough to allow the roll to rotate without slipping assuring that the disc can be transferred in a stable condition and can be put on the turntable with precision and can be easily mass-produced at an increased efficiency, it is made of an elastic material, and it comprises an inner cylindrical wall (2, 11, 21), an annular joint (3, 22) integrally connected to and extending radially outwards from one end of the inner cylindrical wall, and an outer cylindrical wall (4, 12, 23) integrally connected to the annular joint and encircling the inner cylindrical wall, leaving a predetermined space (1a, 20a) between the outer and inner cylindrical walls.

## Description

The present invention relates to a disc-transfer roll, a pair of which is to be arranged on the opposite sides of the disc slot to sandwich and transfer a disc in a disc device.

A disc device rotates a disc such as CD, DVD or the like on its turntable for recording and/or reproducing sound or pictures from the disc. There are two main ways to load a disc onto a turntable, one is to put a disc on a disc tray which appears from the disc slot of the disc device, and then the disc tray is withdrawn to carry the disc to the turntable. The other is to insert the disc from the disc slot directly by hand, and then the disc is pulled in and carried to the turntable. The present invention relates to the latter disc-loading mechanism.

Such pull-in type disc loader is shown in JP 63-298761 (A) as titled "Disc Player" and JP 2002-304798(A) as titled "Disc Recording and/or Reproducing Device". JP 63-298761 (A) discloses upper and lower transfer rolls so arranged that the confronting rolls may sandwich a disc when it appears inside from the disc slot, and that they rotate in opposite directions to transfer the disc to the turntable in the disc device. There is, however, a fear that the disc can be scratched when it is pinched and transferred by the opposite rotating rolls. Also, disadvantageously unpleasing sound may be produced, and the rotating rolls may slip on the disc, thereby losing the exact control in transportation.

JP 2002-304798(A) discloses vertical rolls each having a circumferential groove of arc cross-section made in the middle to catch a disc by the circumference. The roll has a damper member applied to its circumferential groove. The damper member is of rubber or any other material of increased friction index. The area in which the damper member can be put in contact with the disc circumference is very small, and the damper member is not hollow. The damper member, therefore, cannot help use of its own flexibility to absorb and share the burden of the disc. This is insufficient for the purpose.

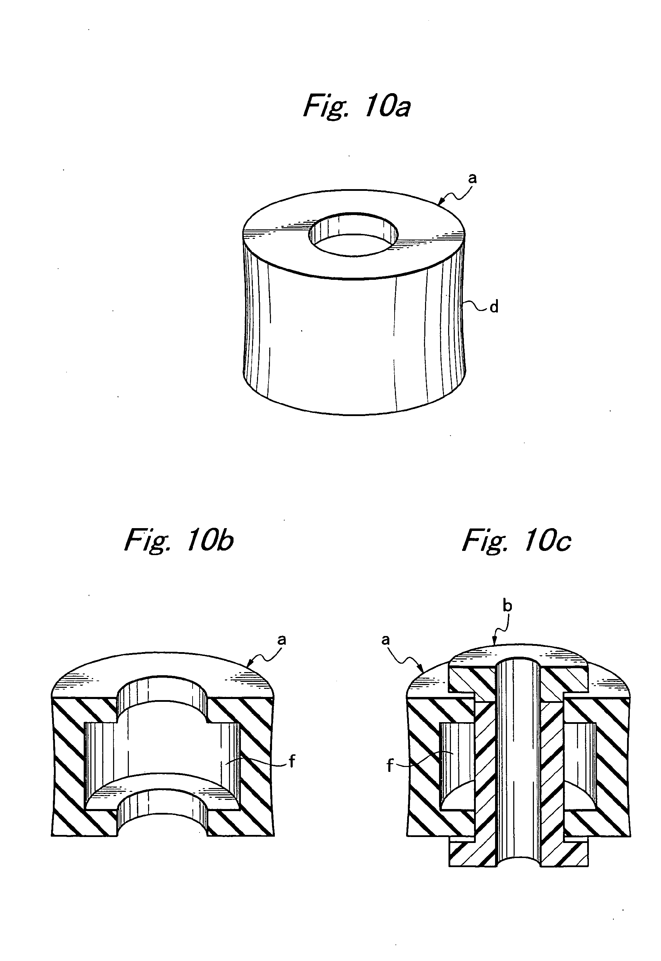

Referring to Figs. 10a, 10b and 10c, a conventional disc-transfer roll of vertical type, comprises a rubber hollow cylinder "a" and a hollow axle "b" passing through the hollow cylinder "a" with an annular space "f' left between the outer circumference of the axle "b" and the inner surface of the hollow cylinder "a". The hollow axle "b" has flanges formed at its opposite ends, and the opposite flanges are laid on the annular top and bottom of the hollow cylinder "a".

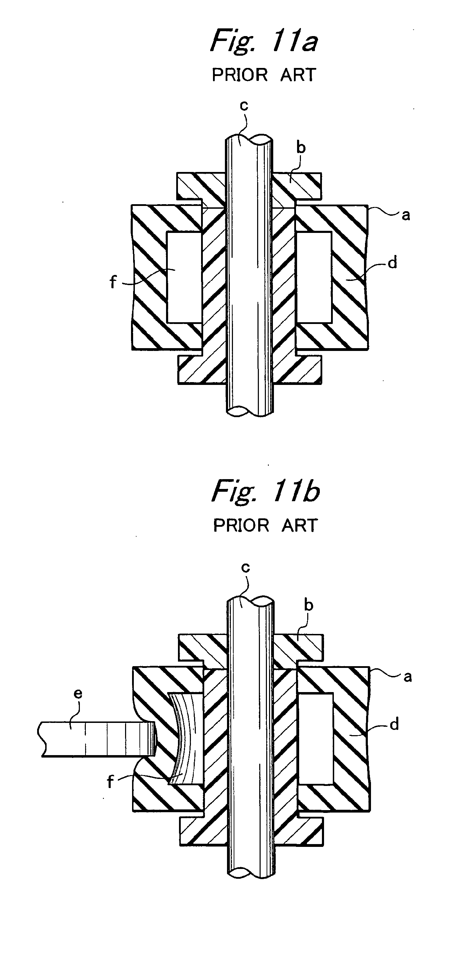

Referring to Figs.11a and 11 b, a shaft "c" is inserted in the hollow axle "b" of the roll, so that it may rotate about the shaft "c". When a disc "e" is applied to the vertical roll "a", the roll "a" yieldingly deforms on the circumferential surface to accept the disc circumference. Then, the deformed part of the roll "a" wraps the abutting edge of the disc "e". Thus, the disc "e" can be transferred without being scratched on either surface.

When the disc "e" hits and presses its circumferential edge against the hollow cylinder "d", the hollow cylinder "d" can be easily deformed (see Fig.11b). The hollow cylinder "d", however, cannot produce a strong counter force. The friction between the roll "d" and the disc "e" is so weak that the roll "d" is apt to slip on the disc "e". Also disadvantageously, the roll "d" is so flexible that it largely deforms and that the disc "e" is not stable vertically in position. This causes an adverse effect on the stable transfer of the disc "e" to the turntable, and finally the disc "e" fails to lie on the turntable with precision.

Also, the metal mold to produce such a hollow roll is complicated in shape, and rolls need to be produced one by one. Accordingly the manufacturing efficiency is lowered and accordingly the manufacturing cost is high. When the roll "a" is rotated, it is apt to slip not only on the disc circumference but also on the shaft "c". This causes an adverse effect on the transfer of the disc.

In view of the above one object of the present invention is to provide a disc-transfer roll for use in a disc device, which the roll can be applied to the disc circumference under pressure strong enough to allow the roll to rotate without slipping, thus assuring that the disc can be transferred in a stable condition and can be put on the turntable with precision.

Another object of the present invention is to provide such a disc-transfer roll that can be easily mass-produced at an increased efficiency.

To attain these objects, a disc-transfer roll, a pair of which are to be arranged on the opposite sides of a disc slot to sandwich and transfer a disc in a disc device, is improved according to the present invention in that it is of an elastic material, comprising an inner cylindrical wall, an annular joint integrally connected to and extending radially outwards from one end of the inner cylindrical wall, and an outer cylindrical wall integrally connected to the annular joint and encircling the inner cylindrical wall, leaving a predetermined space between the outer and inner cylindrical walls.

When the disc hits and pushes its circumferential edge against the disc-transfer roll, the outer cylindrical wall is yieldingly deformed to produce and apply the counter force to the disc. The counter force is strong enough to allow the deformed portion of the outer cylindrical wall to firmly grip the disc, so that the roll can transfer the disc in a stable way without slipping on the roll. This effective grip-and-transfer is attributable to the annular space between the outer and inner cylindrical walls formed by connecting the outer and inner cylindrical walls each other integrally through the annular joint.

The outer cylindrical wall may have its outer surface smoothly curved, becoming gradually larger to the top circumference in diameter. The outer cylindrical wall may be relatively thick in upper and lower circumferential areas, and relatively thin in the intermediate circumference area. This has the effect of providing the roll with an adequate flexibility, allowing the roll to produce a relatively strong counter force to the pressure applied by the disc.

The inner cylindrical wall may have indentations on its outer surface, and the outer cylindrical wall may have indentations on its inner surface, the indentations of the inner and outer cylindrical walls being staggered each other. Depression of the outer cylindrical wall, therefore, makes some inter-indentation ridges mesh with counter indentations. This effectively makes the roll resist to the disc's inclination of twisting the roll, and it is assured that a contact pressure is not lost between the roll and the disc.

One half of a cylindrical body may be tucked up onto the remaining half to provide the outer cylindrical wall, the remaining half under the tucked-up half being the inner cylindrical wall. The outer wall may have at least two annular projections formed on its inner surface, or the inner wall may have at least two annular projections formed on its outer surface, thereby leaving annular spaces between the outer and inner cylindrical walls. The outer wall is somewhat sunk in the middle by tucking-up and stretching the one half to roll back onto the remaining half of the cylindrical body. The annular subsidence thus formed can be used in holding the disc in correct horizontal position.

The outer wall may have a plurality of projections formed on its inner surface and/or the inner wall may have a plurality of projections formed on its outer surface. Thus, predetermined spaces may be left between the outer and inner cylindrical walls. When the roll grips the disc by the circumference, and when the roll rotates, the disc pushes its circumference against the corresponding annular zone of the roll behind which empty spots and solid spots are alternately arranged, so that the contact pressure which the rotating roll experiences may increase and decrease alternately. Such periodic variation of contact pressure causes similar variation of the friction between the disc and the roll, which effectively prevents the slipping between the disc and the roll.

Other objects and advantages of the present invention will be understood from the following description of some disc-transfer rolls according to preferred embodiments of the present invention, which are shown in accompanying drawings.
Fig.1a is a perspective view of a disc-transfer roll according to a first embodiment of the present invention; Fig.1b is a longitudinal section of the disc-transfer roll; and Fig.1c is a similar longitudinal section of the roll-and-axle;
Fig.2a is a longitudinal section of the roll-and-axle fitted on a shaft; and Fig.2b is a similar longitudinal section illustrating how the roll is deformed when a disc hits and pushes its circumferential edge against the roll;
Fig.3 is a perspective view of a disc-transfer roll according to a second embodiment of the present invention;
Fig.4a is a perspective view of a disc-transfer roll according to a third embodiment of the present invention; and Fig.4b is a perspective view of the disc-transfer roll prior to tucking-up;
Fig.5a is a longitudinal section of the roll-and-axle fitted on a shaft; and Fig.5b is a similar longitudinal section illustrating how the roll is deformed when a disc hits and pushes its circumferential edge against the roll;
Fig.6 is a perspective view of a cylindrical body before it is tucked up and rolled back into a disc-transfer roll according to a fourth embodiment of the resent invention;
Fig.7a is a perspective view of a disc-transfer roll according to a fifth embodiment of the resent invention, and Fig.7b is a perspective view of the unfolded disc-transfer roll;
Fig.8 is a perspective view of a disc device having a pair of disc-transfer rolls according to the present invention arranged on the opposite sides of the disc slot;
Fig.9 is a top plan view of the disc device, showing its disc transfer mechanism;
Fig.10a is a perspective view of a conventional disc-transfer roll; Fig.10b is a longitudinal section of the disc-transfer roll; and Fig.10c is a similar longitudinal section of the roll-and-axle; and
Fig.11 a is a longitudinal section of the roll-and-axle having a shaft inserted in the hollow axle; and Fig.2b is a similar longitudinal section illustrating how the roll is deformed when a disc hits and pushes its circumferential edge against the roll.

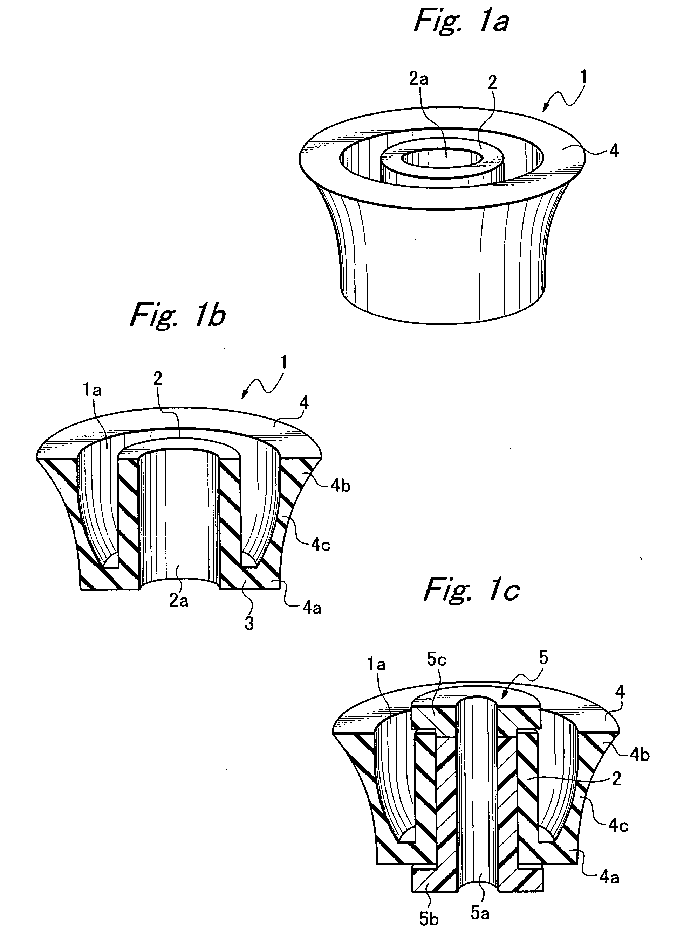

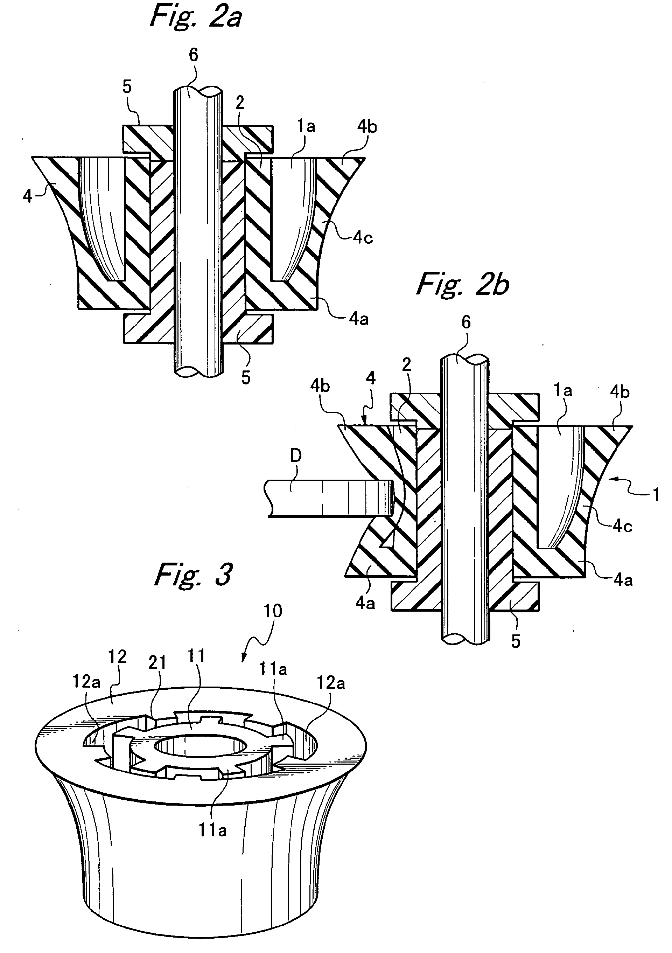

Referring to Figs.1a, 1b, and Figs.2a and 2b, a disc-transfer roll 1 according to the first embodiment is a molded article of rubber or any other elastic material. It comprises an inner cylindrical wall 2 having an axle hole 2a made at its center, an annular joint 3 integrally connected to and extending radially outwards from the lower circumference of the inner cylindrical wall 2, and an outer cylindrical wall 4 integrally connected to the annular joint 3 and encircling the inner cylindrical wall 2, leaving a predetermined space 1 a between the inner and outer cylindrical walls 2 and 4. The outer cylindrical wall 4 has its outer surface smoothly curved, becoming gradually larger to the top circumference in diameter. The outer cylindrical wall 4 is relatively thick in lower and upper circumferential areas 4a and 4b, and relatively thin in the intermediate circumference area 4c. The roll 1 is injection-molded by pouring a liquid-phase of elastic material into a metal mold. The diverging shapes of the outer surface and diverging inter-wall space of the roll 1 facilitate removal of the shaped roll from the metal mold.

As shown in Fig.1c, a hollow fitting axle 5 is inserted in the center hole 2a of the roll 1, and as shown in Fig.2, a rotary shaft 6 is inserted in the through hole 5a of the roll-and-axle assembly. The fitting axle 5 has a through hole 5a made at its center for inserting the rotary shaft 6. Also, the fitting axle 5 has a lower flange 5b integrally connected to its lower end, and an upper flange 5c detachably connected to its upper end. The fitting axle 5 without the upper flange 5c is inserted in the through hole 2a of the roll 1, and then, the upper flange 5c is fixed to the upper end of the fitting axle 5 to sandwich the roll 1 between the upper and lower flanges of the fitting axle 5.

When a disc hits and pushes its circumferential edge against the roll 1 on the middle 4c, the roll 1 is somewhat deformed at the middle 4c, which is relatively thin. Specifically, the thin middle 4c is collapsed, thereby allowing the upper and lower thick areas to overhang. Thus, the circumferential edge of the disc D is wrapped and placed in correct position. The wrapping of the circumferential edge of the disc D effectively contributes increasing the friction between the disc D and the roll 1, thereby preventing the slipping between the roll 1 and the disc D, and assuring the stable transfer of the disc D.

Referring to Fig.3, a disc-transfer roll 10 according to the second embodiment of the present invention is different from the first embodiment only in that: the inner cylindrical wall 11 has vertical projections 11a on its outer surface; and the outer cylindrical wall 12 has vertical recesses 12a on its inner surface. These vertical recesses of the inner and outer walls are staggered with each other. When the outer cylindrical wall 12 is depressed, some vertical projections 11a of the inner wall 11 fit in the counter vertical recesses 12a of the outer wall 12. While a pair of such rolls 10 sandwich and transfer a disc, each roll 10 is pressed in the middle by the disc. Then, the roll can be protected from being twisted and deformed even though the disc applies a twisting force to the roll.

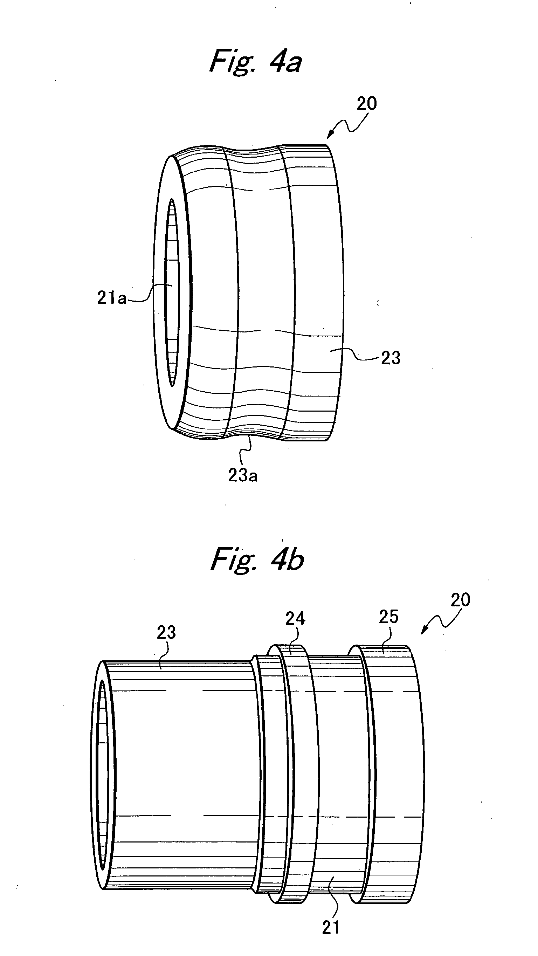

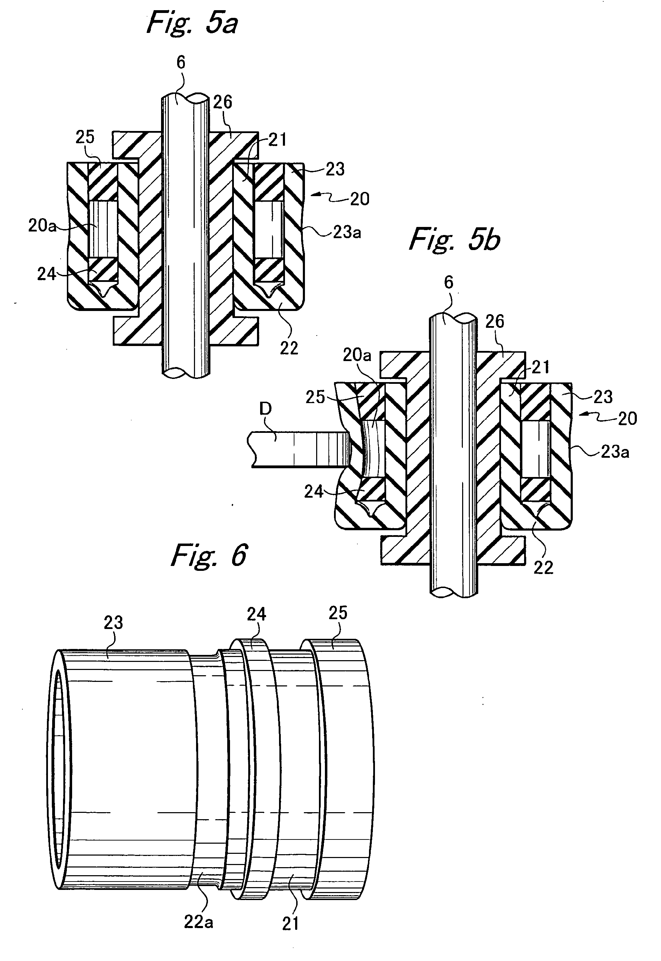

Figs.4a and 4b, and Figs.5a and 5b show a disc-transfer roll 20 according to the third embodiment of the present invention. One half of the rubber cylindrical body is tucked up and rolled back onto the remaining half to form the outer cylindrical wall 23, and then, the remaining half under the tucked-up half turns into the inner cylindrical wall 21. Thus, the rubber cylindrical body of Fig.4b is changed into the disc-transfer roll 20 of Fig.4a. The roll 20 has an axle hole 21 a made at its center. A hollow fitting axle 26 is inserted into the axle hole. The annular narrow portion about which the cylindrical body is folded defines the joint 22, by which the inner and outer walls 21 and 23 are integrally connected to each other. The outer wall 23 has a subsidence 23a formed at the middle of the outer surface. The cylindrical half to turn into the inner wall 21 has two annular narrow projections 24 and 25, which define the subsidence 23a at the middle of the outer surface of the outer wall 23. The annular projections 24 and 25 define the annular space 20a between the inner and outer walls 21 and 23 (see Fig.5a). The cylindrical half to turn to the outer wall 23 is relatively thin, thereby facilitating the tucking-up of the cylindrical half over the remaining half of the cylinder body. The thin cylindrical half is stretched and tucked to turn into the outer wall 23, and then the subsidence 23a appears as a result from the counter action to the stretch of the outer surface.

Referring to Fig.5a, a hollow fitting axle 26 is inserted in the through hole of the roll 20, and then a shaft 6 is inserted in the through hole of the fitting axle 26. When a disc D hits and presses its circumferential edge against the subsidence 23a, the roll 20 is somewhat collapsed (see Fig.5b). The subsidence 23a yieldingly sinks to fit around the disc edge. Consequently the inner space 20a reduces until the counter force originating from the rings 24, 25 supporting the outer wall 23 is equal to the pressure applied by the disc edge to the subsidence 23a. In this position the inner stress and friction between the disc edge and the roll makes it possible to transport the disc without slipping.

Fig.6 shows a disc-transfer roll according to the fourth embodiment of the present invention. In order to facilitate the tucking of the outer wall section 23 of the cylindrical body a circumferential groove 22a is made in the outer-and-inner wall joint section 22. The outer wall section 23 of the cylindrical body is tucked onto the inner wall section 21, and the so provided roll looks like the roll of Fig.4a.

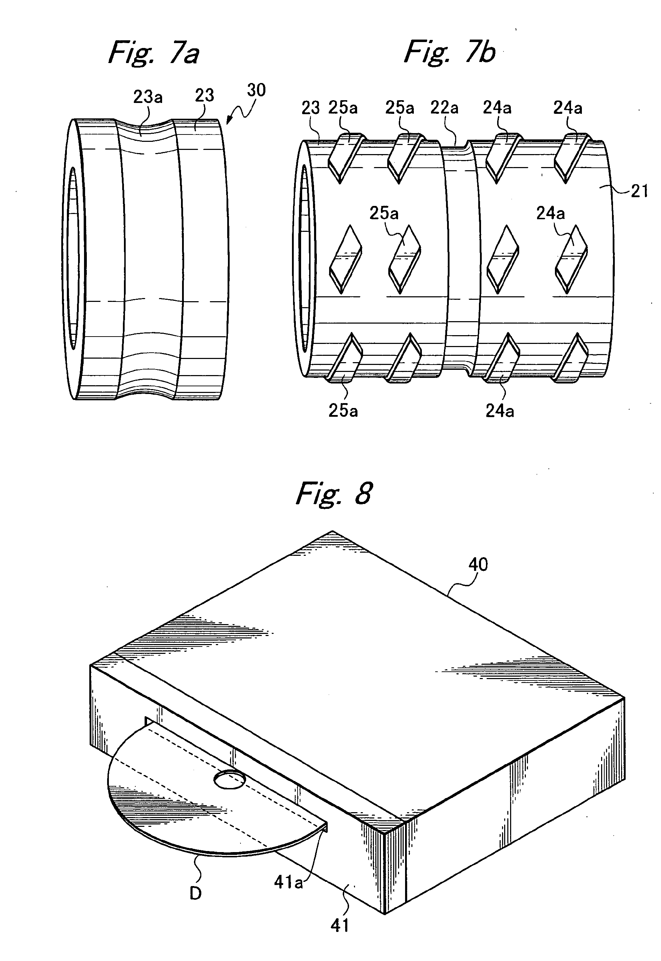

Figs.7a and 7b show a disc-transfer roll according to the fifth embodiment of the present invention. As shown, a circumferential groove 22a is made in the outer-and-inner wall joint section 22. The outer wall section 23 is as thick as the inner wall section 21. As seen from Fig.7b, the inner wall section 21 has a plurality of lozenge projections 24a spiraled on its circumference, and likewise, the outer wall section 23 has a plurality of lozenge projections 25a spiraled on its circumference. When the outer wall section 23 of the cylindrical body is tucked over the inner wall section 21 of the cylindrical body, the lozenge projections 25a are cross-laid on the lozenge projections 24a. Fig.7a shows the roll 30 thus provided.

The roll 30 has a circumferential groove 23a made on its outer circumference. The lozenge projections 24a, 25a are arranged discretely. Therefore, when the roll 30 rotates with the disc edge applied to the circumferential groove 23a, the inner stress thereby caused is not even in the outer wall 23. This causes a strong friction to appear intermittently, so that the disc can be transported without slipping. The lozenge projections 24a, 25a need not be arranged at regular intervals. In order to prevent the roll from shaking and resonating with the disc they may be arranged at random.

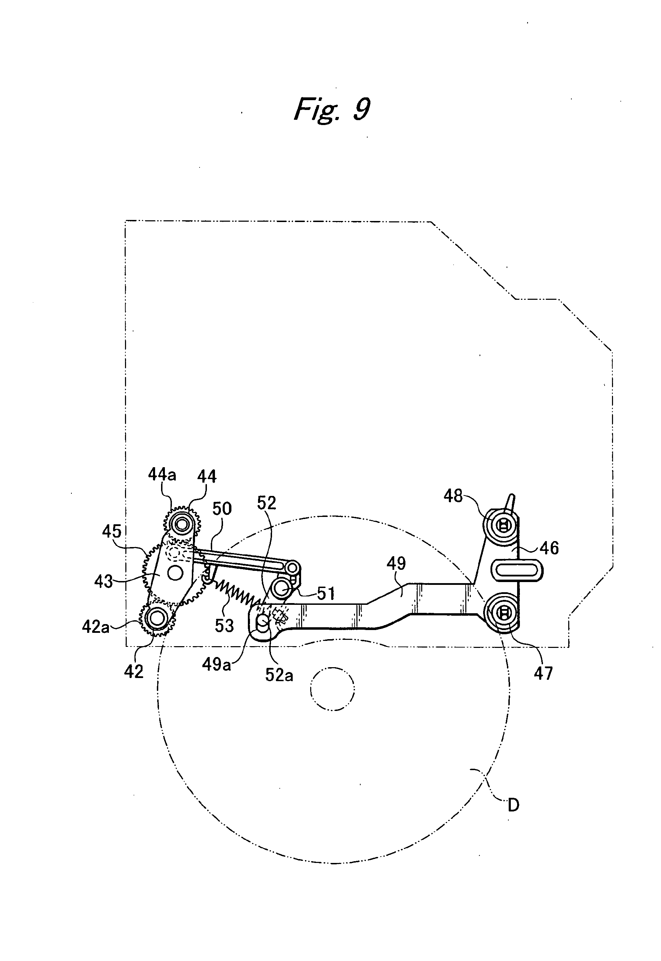

The above mentioned disc-transfer roll is used in such a disc device 40 as shown in Fig.8, in which a disc D is inserted in the disc slot 41 a of the front 41. Fig.9 shows a disc transport mechanism in the disc device 40. As seen from the drawing, a first drive roll 42 is rotatably fixed to the chassis of the device 40 next to the left end of the disc slot 41 a; a swing arm 43 is fixed to the drive roll 42 to swing about the pivot of the drive roll 42; and a second drive roll 44 is fixed to the free end of the swing arm 43. The first drive roll 42 has a first gear 42a fixed to its pivot, and likewise, the second drive roll 44 has a second gear 44a fixed to its pivot.

An intermediate gear 45 is fixed to the swing arm 43 to mesh with the first and second gears 42a and 44a, and the first drive roll 42 is connected to a drive motor (not shown). When the first drive roll 42 is rotated, the second drive roll 44 is driven through the first gear 42a, intermediate gear 45 and second gear 44a. When the swing arm 43 swings about the pivot of the drive roll 42, the second drive roll 44 changes in position. When the disc D is inserted in the disc slot 41a, the swing arm 43 swings counterclockwise.

On the right side of the disc slot 41 a there is a movable slider 46 having first and second rolls 47 and 48 rotatably fixed to its opposite ends. When the disc D is inserted in the disc slot 41 a, the slider 46 along with the first and second rolls 47 and 48 moves rightwards.

A first lever 49 is integrally connected to the slider 46 to extend inward, whereas a second lever 50 is fixed to the swing arm 43. A rotatable intermediate lever 52 can rotates about its pivot 51, and is connected to the first and second levers 49 and 50. The first lever 49 is stationary to the slider 46. It has a long hole 49a made at its end, and the intermediate lever 52 has a stud pin 52a on one end. The first lever 49 is movably connected to the intermediate lever 52 with the stud pin 52a in the long hole 49a.

When the disc D is inserted from the disc slot 41 a, the disc edge hits the first drive roll 42 and the first roll 47. The sensor (not shown) detects insertion of the disc D, and then, the drive motor starts running in response to the signal from the sensor, so that the first drive roll 42 may rotate. The drive motor rotates in such a direction that the first drive roll 42 pulls the disc D inward. The disc D is pushed by hand to assist the pulling-in of the disc D by the drive roll 42.

As the disc D moves forward from the disc slot 41 a, the slider 46 moves outwards, and accordingly the distance between the first drive roll 42 and the first roll 47 increases. The first and second levers 49 and 50 are connected by a coiled spring 53 to keep the first roll 47 in contact with the disc D.

The disc D moves forwards until it is put in contact with the second drive roll 44 and the second roll 48. Thus, the disc D is surrounded and pinched by the four rolls, that is, the first and second drive rolls 42 and 44, and the first and second rolls 47 and 48. All the rolls rotate and transfer the disc D to the turntable (not shown). Four rolls closely put in contact with the circumference of a disc permit stable transfer of the disc without slipping.

The disc-transfer roll of the present invention mentioned above is used as these first and second drive rolls 42 and 44, and the first and second rolls 47 and 48 in the disc device 40.

According to the disc-transfer roll of the present invention, it snugly fits on the disc circumferential edge and causes adequate friction between the disc circumferential edge and the roll surface, and therefore it can transfer the disc stably to a desired position without slipping. Further, the roll can be mass-produced, and accordingly the manufacturing cost is low.

## Claims

1. A disc-transfer roll, a pair of which are to be arranged on the opposite sides of a disc slot (41 a) to sandwich and transfer a disc in a disc device (40), **characterized in that** it is of an elastic material, comprising an inner cylindrical wall (2, 11, 21), an annular joint (3, 22) integrally connected to and extending radially outwards from one end of the inner cylindrical wall, and an outer cylindrical wall (4, 12, 23) integrally connected to the annular joint and encircling the inner cylindrical wall, leaving a predetermined space (1a, 20a) between the outer and inner cylindrical walls.

2. A disc-transfer roll according to claim 1, wherein the outer cylindrical wall (4, 12) has its outer surface smoothly curved, becoming gradually larger to the top circumference in diameter, the outer cylindrical wall being relatively thick in upper and lower circumferential areas, and relatively thin in the intermediate circumference area (4c).

3. A disc-transfer roll according to claim 2, wherein the inner cylindrical wall (11) has indentations (11 a) on its outer surface, and the outer cylindrical wall (12) has indentations (12a) on its inner surface, the indentations of the inner and outer cylindrical walls being staggered each other whereby depression of the outer cylindrical wall makes some inter-indentation ridges mesh with counter indentations.

4. A disc-transfer roll according to claim 1, wherein one half of a cylindrical body is tucked up to provide the outer cylindrical wall (23), the remaining half under the tucked-up half being the inner cylindrical wall (21), the outer wall has at least two annular projections (24, 25) formed on its inner surface or the inner wall has at least two annular projections (24, 25) formed on its outer surface, thereby leaving annular spaces (20a) between the outer and inner cylindrical walls.

5. A disc-transfer roll according to claim 4, wherein the outer wall (23) has at least two annular projections (23, 25) formed on its inner surface, and the inner wall has at least two annular projections (23, 25) formed on its outer surface.

6. A disc-transfer roll according to claim 1, wherein one half of the cylindrical body is tucked up onto the remaining half to provide the outer cylindrical wall (23), the remaining half under the tucked-up half being the inner cylindrical wall (21), the outer wall has a plurality of projections (25a) formed on its inner surface or the inner wall has a plurality of projections (24a) formed on its outer surface, thereby leaving predetermined spaces between the outer and inner cylindrical walls.

7. A disc-transfer roll according to claim 6, wherein the outer wall (23) has a plurality of projections (25a) formed on its inner surface, and the inner wall (21) has a plurality of projections (24a) formed on its outer surface.
